# EUROPEAN PATENT SPECIFICATION

(11) **EP 1 468 601 B1**
(45) Date of publication and mention of the grant of the patent: **22.11.2006**
(21) Application number: 04381009.2
(22) Date of filing: 08.04.2004
(51) Int. Cl.: A01G 13/02

(54) **Improved device for protecting tree and plant watering basins**
Verbesserte Vorrichtung zum Schutz von Baum- und Pflanzwassergruben
Dispositif amélioré pour protéger les cuvettes d'irrigation d'arbres et plantes

(30) Priority: 15.04.2003 ES 200300896
(43) Date of publication of application: 20.10.2004
(73) Proprietor: Gomis Frau, José, 07010 Baleares (ES)
(72) Inventor: Gomis Frau, José, 07010 Baleares (ES)
(74) Representative: Sanz-Bermell Martinez, Alejandro

(56) References cited:
- WO-A-97/44996
- CH-A- 674 034
- ES-A- 2 154 214
- FR-A- 2 829 358
- US-A- 3 727 347
- US-A1- 2003 150 157

## Description

The device refers to a set of items in a mosaic layout, for covering tree and plant-wells. The items, that can be decorated with engravings, logotypes etc. can be joined together by means of a m ale-female system, optionally with staples, allowing holes for trainers, and the mosaic is adaptable to the stalk of the plant, to uneven land and provides for installing irrigation.

This is for application in gardening, arboriculture and horticulture.

### State of the art

The state of art as regards covering tree and plant-wells includes the use of metal grid-type items, cement or concrete pieces, in some cases set out in mosaic pattern, as described in patent ES 2154214.

The greatest drawback about the items described in ES 2154214 is the fact of not being secured to one another, since the acts of vandalism so customary in the urban setting mean a danger for the conservation of unsecured items in tree wells. Furthermore, through being items of an artistic nature, these would doubtlessly be subject to vandalism in public spaces without exhaustive supervision.

Another disadvantage of the items commonly used in mosaic pattern such as simple paving stones and also the ones described in ES 2154214 is the failure to provide holes in the well cover, for an irrigation device avoiding the need to locate the irrigation hose over the opening in the well cover every time that the plant needs to be watered.

Normally the use of trainers on growing trees or bushes or for forming climbing plants is limited to the open space in the area where the well is left open, that is, where the stalk or trunk emerges, this being a great impediment for locating trainers which need to be placed at a point far enough away from the well opening area, and that is still covered by the grid, such as would for example be necessary for the artistic control of growth of ivies, oleanders etc., or for physically more stable securing, of larger-diameter palm trees, due to the greater moment of inertia of the trainers located at a greater distance from the trunk, a layout which is not possible with the present methods for covering tree wells, thus meaning that large trees that require trainers have to have these set on the outside of the wells (since the incorporation of trainers in wells has not up to now been envisaged) with the consequent loss of suitable aesthetics. In other words, well covers could not go any further than was allowed by the trainers of large trees.

On the other hand, the structures of tree and plant-well covers on which mosaic items are rested, such as the one described in ES 2154214, have a utility restricted by the danger of breakage of the central items, which are supported indirectly, without being in contact with the ground, by the structure of the base in which the items fit. This means a great limitation of their use, especially in cases of covering relatively large-sized tree wells (for palm trees, carob trees etc.) since there is a great possibility of the mosaic breaking, through the central items being physically "in the air" (held by adjacent items).

It is also difficult for the construction described in ES 2154214 to be held by the earth below, since the earth movements when drying and being moistened mean that the assembly described in ES 2154214 cannot be considered in any way to be held by the earth at all times, and this constitutes a fundamental difference from the present invention.

Furthermore it is common for surface roots of trees and bushes to protrude from the base of earth. To solve this difficulty involved in many systems of protecting tree wells, this invention proposes the vertical adaptation of the parts of the mosaic so that the outer surface of the mosaic (the side seen from the pavement or street) is flat or uniform, or has a certain decorative form, such as undulations, engravings, high-reliefs or bas-reliefs.

### Detailed description of the invention

This invention consists of a set of items made of strong materials (such as concrete, cement, wood, glass fibre, plastics, metals etc,) which allow tree and plant-wells to be covered so that the total surface area to be spanned is extremely easy to cover with no difficulty other than adding a greater number of items (with no need for prefabricated moulds to house all the pieces, unlike the present technique indicated in the inventions named above), the parts being linked in a male-female system and/or also optionally and preferably by means of staples which may be in a horseshoe shape and be made of metal.

The items remain in contact with the ground-earth, by means of adjustments in their vertical length adaptable to any unevenness in the land, for example, roots, so that this leaves a surface flush with the pavement or paving where these are set, this upper surface of the mosaic not necessarily being flat, but being able to be undulating, spiral or have other decorative shapes and each item, or at least some of these, to have artistic items by means of engravings, drawings or rivets, such as for example the coat of arms or flag of the place where these are used (after obtaining the required permission), children's drawings, etc..

The items can also be trimmed when required, for example in the event of it being impossible to overcome any unevenness of the land through the pressure of the mosaic part.

The mosaic also allows water through by means of at least some piece with holes going through the vertical and or horizontal length of the item, preferably on one of its edges.

There are also a certain optional number of holes going vertically through the items, for fitting trainers which allow the growing plant to be secured, or alternatively, to give artistic form to the tree, climbing plant or bush, that is the common purpose of trainers. One additional item of the pieces consists in holes which go through one or more items, in parallel or perpendicular to the surface determined by the earth, for fitting hoses which can be installed or removed for irrigation purposes or automatic irrigation systems (for example, fixed hoses).

### Preferential embodiment of the invention

As an example 6 sheets of drawings are given with 11 figures to illustrate the present invention, without implying any limitation thereto.

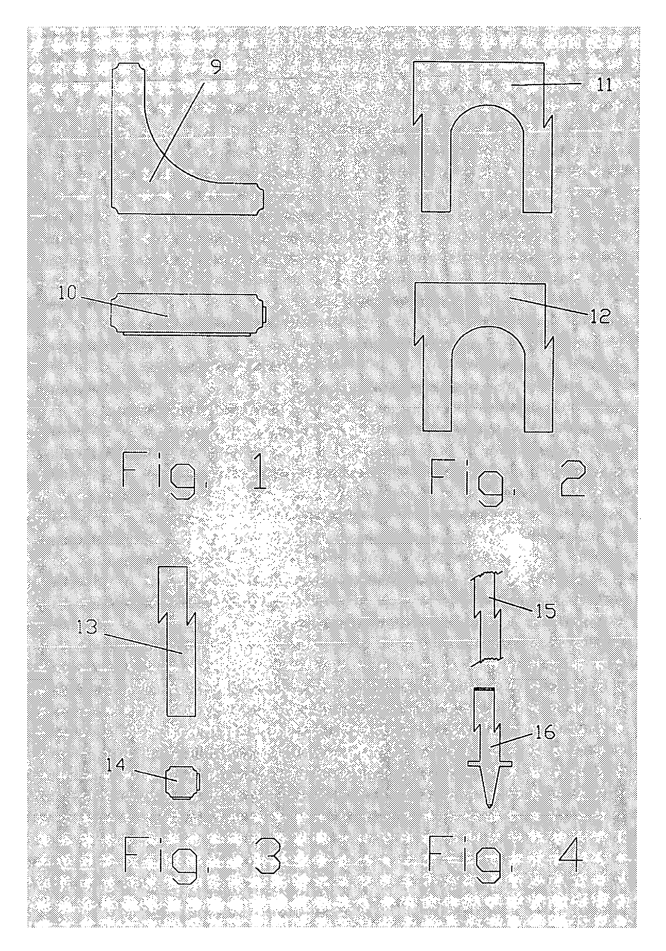

Figure 1 shows a profile (9) and plan view (10) of a piece of the mosaic. It can be seen in the plan view (10) that the item is rectangular in shape.
Figure 2 also shows two different profiles (11, 12) of the same item (like a table) in which one can see peaks which constitute the base for making the male-female couplings of the items.
Figure 3 shows a part which in plan view (14) is square (with the exception of small rims meant for the couplings) and in profile (13) this is rectangular (with the exception of certain tips meant for the male/female couplings).
Figure 4 shows a detail (15) of a piece, which can have any size, within reasonable bounds, and which has the coupling rims anywhere along the vertical length of the item, considering this to be vertical when it is properly placed in the mosaic. It is shown that the items (16) can be fitted with a lower system in stake shape to be stuck into the ground and also a rim, which can be annular in shape, preventing the item from sinking too far into the earth.
Figure 5 shows the dimensions and the upper view of a full tree well, with rectangular items of different sizes, chosen at random insofar as is reasonable.

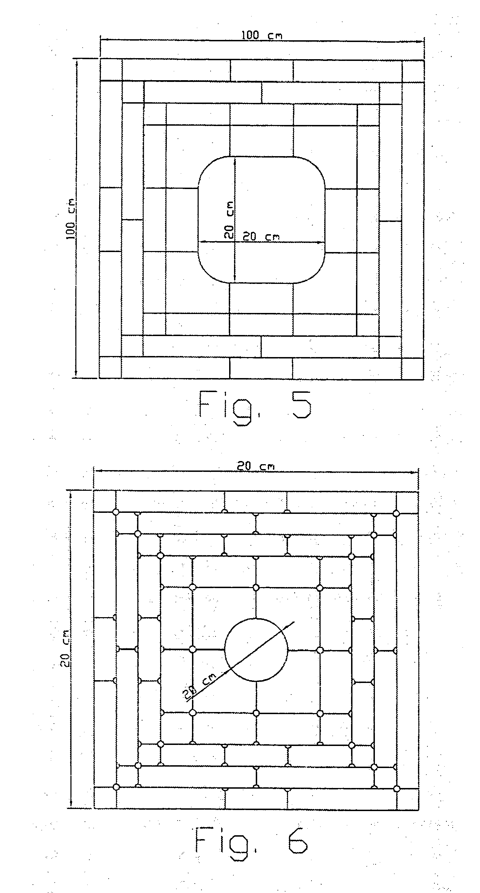

Figure 6 is unlike figure 5 in that the opening is circular (20 cm. in diameter) unlike the practically square opening (with rounded corners) of Figure 5.

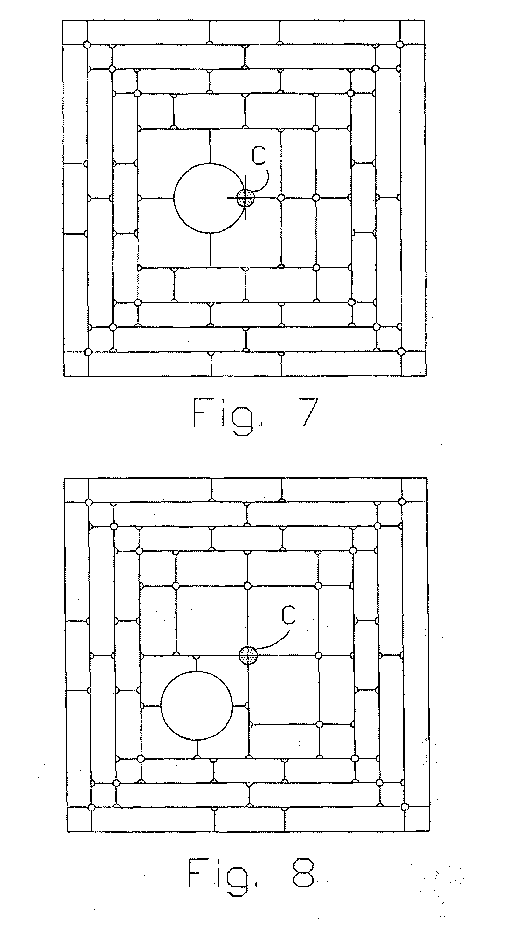

Figures 7 and 8 show how the opening of the tree well can be off centre in respect of the centre of the mosaic which is shown square, as an illustration and without implying any limitation, since the full mosaic could be diamond, triangular, polygonal or irregular-shaped etc..

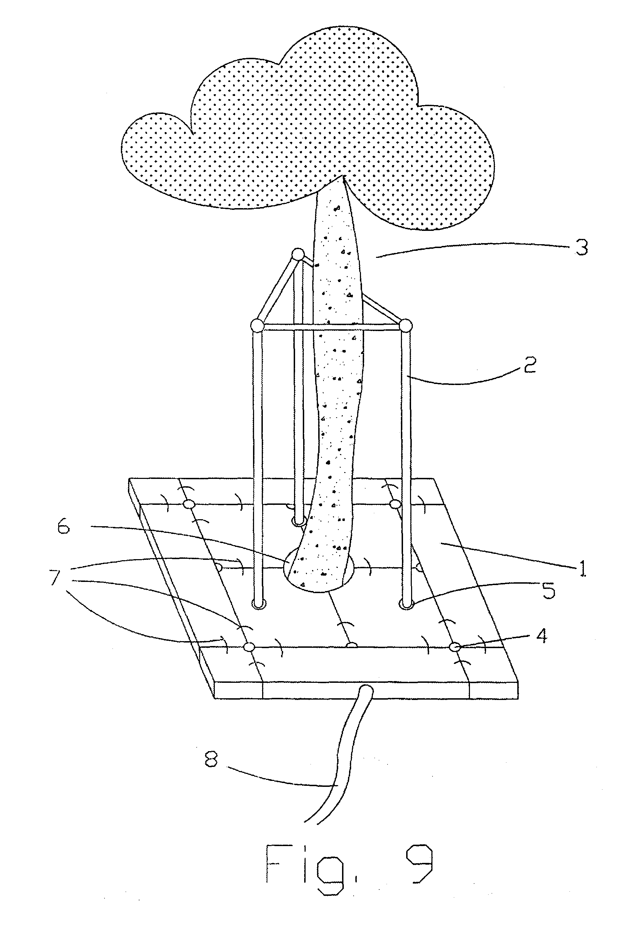

Figure 9 shows a full layout of a tree well with:
   (1) items of the mosaic
   (2) trainers
   (3) plant
   (4) holes for letting in water/air
   (5) holes for the trainers to go through the items
   (6) opening in the tree well
   (7) staples stuck between the metal items of the mosaic
   (8) hose inserted under the tree well grill by means of a hole placed for this purpose.

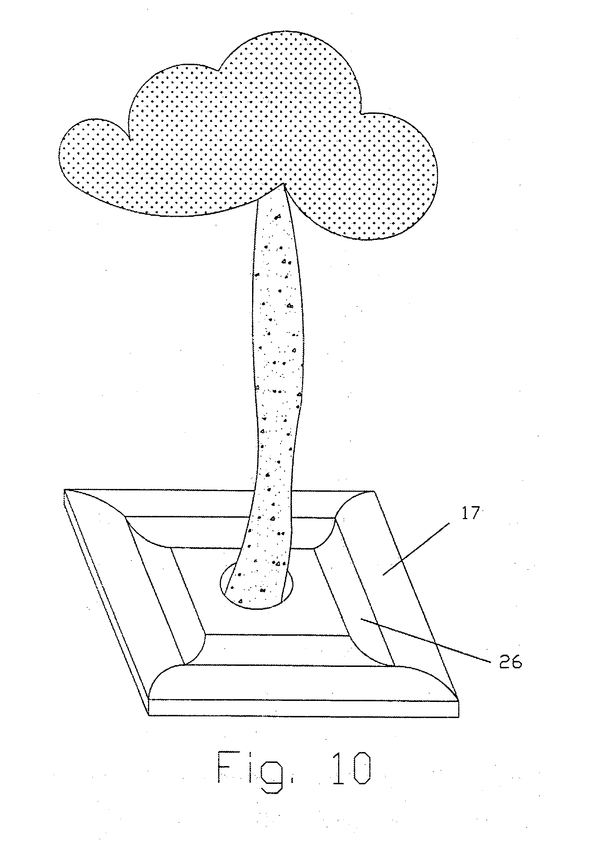

Figure 10 shows a particular form of embodiment in which the surface of the items is convex (17) in the outer square of the tree well (the particular pieces are not shown), alternating with a concave part (26) in the middle square of the mosaic and later the inner square where the hole of the tree well is located is flat.

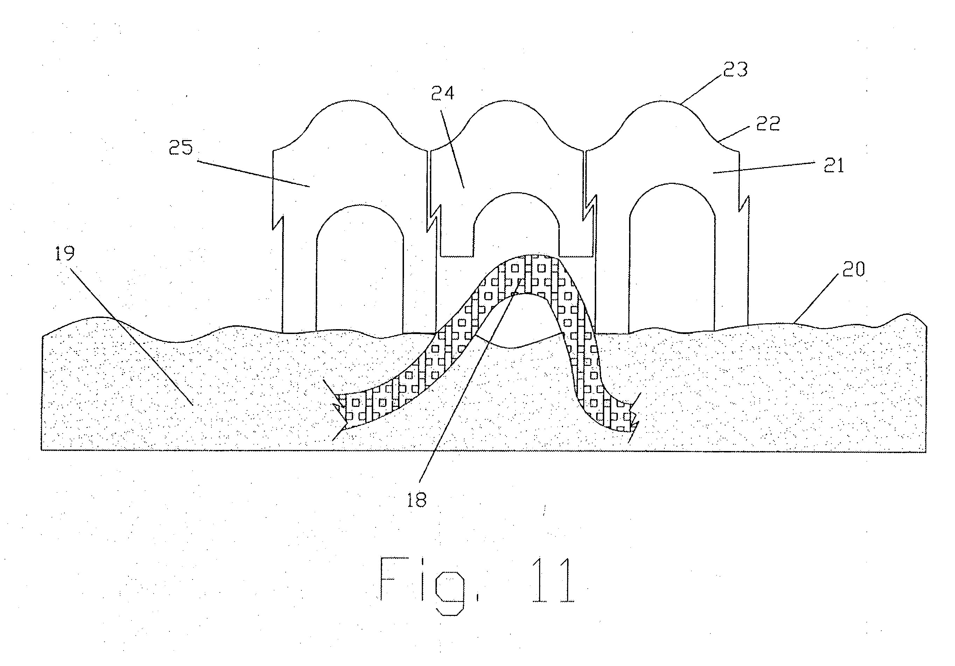

Figure 11 shows the layout (by means of a cross-section) of items (21), (24) and (25) in the case of a root (18) or any other item making the surface (20) of the land (19) irregular. We also observe the male-female coupling of the items. It also shows that the upper surface of the mosaic items can have different decorative shapes, as those formed by the bell shape of the piece thanks to undulations (22) and (23).

## Claims

1. Set of items for protecting tree and plant-wells, which are placed inside the well, forming as a whole a surface that is flush, but not necessarily flat (17,26), with the pavement or paving in which said well is placed, and which allow covering adjustable to the growth of the plant, **characterised in that**:
• they are set out in a mosaic pattern, and have a rectangular surface shape when seen in plan view;
• they have a male-female shape (15) and can be assembled together;
• the pieces are in direct contact with the ground or base; and
• some pieces can be fitted independently of others.

2. Set of items according to claim 1, **characterised in that** they have means of joining together consisting of staples (7).

3. Set of items according to claims 1 and 3, **characterised in tha**t the horseshoe shaped staples (7) are resilient and/or metallic.

4. Set of items for protecting tree wells which allows oxygenation and irrigation, according to claim 1 and either of 2 and 3, **characterised in that** some piece/s has/have hole/s in it/them, as well as hole/s for fitting hoses or automated irrigation systems which provide the earth with water under the mosaic items.

5. Set of items according to claim 1 and any of claims 2 to 4, **characterised in that** some piece/s is/are fitted with holes (5) for allowing trainers (2) through for the plant.

6. Set of items according to claim 1, and any of claims 2 to 5, **characterised in that** the layout of the set of items is convex (26) in respect of the ground on which these are set.

7. Set of items according to claim 1, and any of claims 2 to 5, **characterised in that** the layout of the set of items is concave (27) in respect of the ground on which these are set.

8. Set of items according to claim 1 and any of claims 2 to 7, **characterised by** the fact of the covering being done by pieces assembled to the ones adjacent to them in such a way as to reach the trunk even if this is off centre.

9. Set of items according to any of claims 1 to 8, **characterised in that** the pieces (21, 24, 25) are adjusted together by means of spatial configurations of forms matching one another.

10. Set of items according to any of the preceding claims, **characterised in that** the pieces (16) have the lower form of a stake for fixing to the ground.

11. Set of items according to claim 10, **characterised in that** the stake shape has a crosspiece limiting how far it can go into the earth.

12. Set of items according to any of the previous claims, **characterised in that** the outer surface form taken by the mosaic which gives on to the street side is not flat in profile and has some decorative shape (17, 26, 23, 22), preferably waves, spirals etc..

13. Set of items according to any of the preceding claims, **characterised in that** the outer surface form of at least some item has a decorative pattern, said decoration being obtained through engraving, drawing, riveting or any common technique used in decorating solid items.

## Patentansprüche

1. Ein Satz Teile zum Schutz von Baumumrandungen, die, im Innern der Umrandung angeordnet, zusammen eine bündige Fläche bilden, jedoch nicht unbedingt eine Ebene bilden müssen (17, 26) mit dem angrenzenden Bürgersteig bzw. Pflaster, und die eine mit dem Wachstum der Pflanze konforme Anpassug der Abdeckung ermöglichen, **dadurch gekennzeichnet, dass** die Teile
• in Mosaikform angeordnet sind, und eine rechteckige Fläche bilden,
• durch Nut und Spund (15) miteinander zu verbinden sind,
• direkt auf dem Boden bzw. Untergrund aufliegen, und
• unabhängig voneinander verlegt werden können.

2. Ein Satz Teile nach Anspruch 1, **dadurch gekennzeichnet, dass** diese über Mittel und zwar in Klammerform (7) zur Verbindung untereinander verfügen.

3. Ein Satz Teile nach Anspuch 1 und 2, **dadurch gekennzeichnet, dass** die Klammern (7) eine Hufeisenform haben und elastisch und/oder aus Metall sind.

4. Ein Satz Teile zum Schutz von Baumumrandungen, die die Sauerstoffanlagerung und die Bewässerung ermöglichen nach Anspruch 1 und einem der Ansprüche von 2 und 3, **dadurch gekennzeichnet, dass** ein/einige Teil/e über Löcher verfügt /verfügen für die Aufnahme von Schläuchen oder von automatischen Bewässerungssystemen, die die Erde unterhalb der Mosaikanordnung mit Wasser versorgen.

5. Ein Satz Teile nach Anspruch 1 und einem der Ansprüche von 2 bis 4, **dadurch gekennzeichnet, dass** ein/einige Teil/e mit Löchern (5) zum Durchstecken der Pflanzenschutz- bzw. -stützpfähle (2) versehen ist/sind.

6. Ein Satz Teile nach Anspruch 1 und einem der Ansprüche von 2 bis 5, **dadurch gekennzeichnet, dass** die Anordnung der Teile konvex ist (26) bezüglich des Bodens, auf dem sie angeordnet

7. Ein Satz Teile nach Anspruch 1 und einem der Ansprüche von 2 bis 5, **dadurch gekennzeichnet, dass** die Anordnung der Teile konkav (27) ist bezüglich des Bodens, auf dem sie angeordnet sind.

8. Ein Satz Teile nach Anspruch 1 und einem der Ansprüche von 2 bis 7, **dadurch gekennzeichnet, dass** die Abdeckung durch aneinander gefügte Teile erfolgt, so dass diese bis zum Baum reichen und zwar unabhängig davon, ob dieser eine zentrale Position hat.

9. Ein Satz Teile nach einem der Ansprüche von 1 bis 8, **dadurch gekennzeichnet, dass** sich die Teile (21, 24, 25) durch entsprechende besondere Konfigurationen aneinander anpassen.

10. Ein Satz Teile nach einem der vorausgehenden Ansprüche, **dadurch gekennzeichnet, dass** die Teile (16) im unteren Bereich mit einem Pflock zu ihrer Verankerung im Boden ausgestattet sind.

11. Ein Satz Teile nach Anspruch 10, **dadurch gekennzeichnet, dass** der Pflock mit einem Querbalken zur Begrenzung der Tiefe seines Eindringens in den Boden versehen ist.

12. Ein Satz Teile nach einem der vorausgehenden Ansprüche, **dadurch gekennzeichnet, dass** die äussere Flächenform des Mosaiks an der zur Strasse gerichteten Seite nicht glatt sondern mit Ornamenten versehen ist (17, 26, 23,22), vorzugweise in Wellen- oder Spiralenform oder dergl.

13. Ein Satz Teile nach einem der vorausgehenden Ansprüche, **dadurch gekennzeichnet, dass** die äussere Flächenform zumindest eines Teiles ein dekoratives Element enthält. Die dekorative Form wird erreicht durch die Anbringung von Gravuren, Zeichnungen Nieten oder durch eine andere übliche Dekorationstechnik, die sich für solide Teile anbietet.

## Revendications

1. Ensemble de pièces pour la protection de déchaussages en cuvette, qui, étant disposées à l'intérieur du déchaussage en cuvette, constituent une surface à ras, mais pas nécessairement plane (17, 26), du trottoir ou du pavage où est située ledit déchaussage en cuvette, et qui permettent une couverture ajustable à la croissance de la plante, **caractérisé par le fait que** :
• elles sont disposées en mosaïque, et sont de forme superficielle rectangulaire, en plan ;
• elles ont une forme emboîtable (15), elles sont assemblables ;
• les pièces sont en contact direct avec le sol ou soubassement ; et
• on peut placer des pièces indépendamment des autres.

2. Ensemble de pièces selon la spécification 1, **caractérisé par le fait qu'**elles disposent de moyens d'union entre elles constitués par des agrafes (7).

3. Ensemble de pièces selon les spécifications 1 et 2, **caractérisé par le fait que** les agrafes (7), en forme de fer à cheval, sont élastique et ou métalliques.

4. Ensemble de pièces pour la protection de déchaussages en cuvette qui permettent l'oxygénation et l'arrosage, selon la spécification 1, et l'une de la 2 ou la 3, **caractérisé par le fait que**, une ou plusieurs des pièces dispose d'orifice(s), ainsi que d'orifice(s) pour placer des tuyaux d'arrosage ou des systèmes d'arrosage automatique fournissant de l'eau à la terre, sous l'ensemble mosaïque.

5. Ensemble de pièces selon la spécification 1 et l'une des 2 à 4, **caractérisé par le fait que**, une ou plusieurs des pièces est dotée de trous (5) de passage de tuteurs (2) pour la plante.

6. Ensemble de pièces selon la spécification 1 et l'une des 2 à 5, **caractérisé par le fait que** la disposition de l'ensemble des pièces est convexe (26) par rapport au sol sur lequel il est disposé.

7. Ensemble de pièces selon la spécification 1 et l'une des 2 à 5, **caractérisé par le fait que** la disposition de l'ensemble des pièces est concave (27) par rapport au sol sur lequel il est disposé.

8. Ensemble de pièces selon la spécification 1 et l'une des 2 à 7, **caractérisé par le fait que** la couverture se fait par pièces assemblées aux pièces contiguës de façon à atteindre le tronc indépendamment du fait que celui-ci soit centré ou non.

9. Ensemble de pièces selon l'une des spécifications de la 1 à la 8, **caractérisé par le fait que** les pièces (21, 24, 25) s'ajustent entre elles selon des configurations spatiales de formes correspondantes entre elles.

10. Ensemble de pièces selon l'une des spécifications précédentes, **caractérisé par le fait que** les pièces (16) possèdent une forme de pic sur la partie inférieure permettant la fixation au sol.

11. Ensemble de pièces selon la spécification 10, **caractérisé par le fait que** la forme de pic possède une traverse limitant la profondeur de son entrée en terre.

12. Ensemble de pièces selon l'une des spécifications précédentes **caractérisé par le fait que** la forme superficielle extérieure, qu'adopte la mosaïque qui donne sur le côté de la rue, de profil, n'est pas plane, et possède une forme décorative (17, 26, 23, 22), de préférence, ondes, spirales, etc.

13. Ensemble de pièces selon l'une des spécifications précédentes, **caractérisé par le fait que** la forme superficielle extérieure d'au moins l'une des pièces, possède un élément décoratif, cette décoration étant obtenue par gravure, dessin, rivure ou toute autre technique usuelle en décoration de pièces solides.
